# EUROPEAN PATENT APPLICATION

(11) **EP 3 029 372 A1**
(43) Date of publication of application: **08.06.2016**
(21) Application number: 15197613.1
(22) Date of filing: 02.12.2015
(51) Int. Cl.: F23G 5/00, F23G 5/027, B09B 3/00, B09B 5/00, B03B 9/06

(54) **PLANT AND PROCESS FOR RECOVERING ENERGY FROM ORGANIC MATRIX WASTE MATERIAL**

(30) Priority: 04.12.2014 IT PN20140065
(71) Applicant: Ianno, Francesco, 00069 Trevignano Romano RM (IT)
(72) Inventor: Ianno, Francesco, 00069 Trevignano Romano RM (IT)
(74) Representative: Cercenà, Alice

(57) **Abstract**

The present invention is related to a plant (100) for recovering energy from organic matrix solid waste material comprising:
- a first section (100A) for receiving and pre-treating said organic matrix solid waste material so as to obtain a mixture having uniform pre-set moisture content and homogeneous particle size;
- a second section (100B) for a pyrolysis treatment and for subsequent washing and cooling a pyrolysis gas obtained, and
- a third section for cooling and purifying a washing liquid of said pyrolysis gas for a subsequent recirculation.

In particular, said plant (100) is recommendable of obtaining a gas having chemical characteristics so as it is suitable to feed endothermic motors and/or cogeneration turbines.

The present invention is, moreover, related to a process for recovering energy from organic matrix solid waste material.

## Description

### TECHNICAL FIELD OF THE INVENTION

The present invention is related to a plant, and respective process, for recovering energy from organic matrix solid waste material, in particular improved to obtain a gas having qualitative characteristics so as to be suitable to feed endothermic motors and/or cogeneration turbines.

### PRIOR ART TECHNIQUE

With the expression organic matrix solid waste material it is meant waste material from various origin, in particular unsorted municipal solid waste material (MSW), having a heterogeneous composition, basically sub-divisible into a dry fraction and a wet fraction; waste material of this type can moreover comprise biomass from agricultural or forestry origin such as from mowing, wooden residues, material collected from street cleaning, etc.

As it is known, the problem of the disposal of waste material has become, in recent times, more and more urgent, in particular in industrialized Countries, but in the developing ones as well. It is also known the possibility of recovering energy from waste material to the end of making the disposal of waste material also financially profitable.

The waste material incineration, meant as direct combustion of the same, certainly makes it possible to recover thermal energy produced by the oxidation of its components; however, this process, which normally occurs in the presence of comburent air, generates a combustion at a low temperature that causes the formation of toxic gases, such as furans and dioxin that, if poured into the atmosphere, cause serious damages to human health and to the environment.

A known solution that makes it possible to overcome the above said disadvantages is the pyrolysis treatment of waste material, that is, a treatment based on a process of thermochemical decomposition of matter that basically occurs in the absence of oxygen, or with a limited presence of the same. Pyrolysis is generally an endothermic process that performs a transformation of the incoming material, by breaking complex molecules and transforming them into structurally less complex molecules.

Pyrolysis products are of different types and comprise a solid fraction, commonly called "activated carbon" or CHAR, a liquid fraction, called "pyrolysis oil" or TAR, a gaseous fraction, called "pyrolysis gas" or SYNGAS, that are obtained in proportions that can basically vary according to the source material and to the process operating conditions, such as temperature and residence time.

Pyrolysis gas actually is a mixture of gases, basically comprising carbon monoxide (CO) and Hydrogen (H₂), with also the presence of variable amounts of methane (CH₄) and carbon dioxide (CO₂), and has a medium/high calorific value, comprised between 12,500 and 20,900 KJ/Nm³; however, the gas yield that can be obtained by means of the traditional pyrolysis technology is rather low and therefore, generally, this type of plants are adapted so as to maximise the production of liquid or solid materials, that, however, need further and expensive processing before they can be reused since they incorporate a plurality of corrosive and pollutant compounds, in particular sulphur based ones.

A plant, and related process, for the pyrolysis treatment of waste material in particular for obtaining gaseous products is described in the Italian patent applications MI2007A001215 and MI2012A001000. These applications describe a plant that exploits a slow pyrolysis at a low temperature, reaching temperatures comprised between 400 and 600°C in the reactor and a reaction rate comprised between 0.5 and 1.5 hours.

In that plant, the incoming organic matrix waste material is added with a specific catalyst for the cracking reactions and is suitably treated, drying it or adding water to adjust its moisture; in fact it is noted that, in order not to adversely affect the gas yield, the water content has to be kept constant at about 30% by weight of the waste material fed to the pyrolysis reactor.

On the contrary, document WO2006/117824 describes a process for the pyrolysis treatment of municipal solid waste material, wherein the incoming material is at first subdivided into three fractions, of which the one with the higher moisture content and smaller sized is sent to the drying process, whereas among the remaining dry fractions, the greater sized one is subject to shredding; subsequently, the three fractions are re-mixed together to form a "feed" having an overall moisture content of 20-25%, suitable to be introduced in the pyrolysis reactor. However, the drying process, even if carried out only on a waste material fraction separated from the others, is anyhow rather costly as regards energy and, consequently, financially.

Instead it would be convenient, and in fact it is an object of the present invention to provide a plant, and respective process, for recovering energy from organic matrix waste material based on an improved and maximised pyrolysis treatment for obtaining a gas, in particular having chemical characteristics so as to be suitable to feed endothermic motors and/or cogeneration turbines.

In the field of the above said task, an object of the present invention is that of realizing a plant for recovering energy from waste material having about 70% of gas yield, capable of receiving waste material having an extremely heterogeneous composition, adjusting its moisture without requiring costly drying steps, and operating with the waste material as it is, without the need of adding catalysts.

Another object of the invention is that of realizing a plant, and related process, wherein the energy recovery is maximised so as to avoid, or at least limit as much as possible the use of fuels and/or heat sources external to the plant, making the process profitable also from the financial point of view.

Still another object of the present invention is that of realizing a plant, and related process, for recovering energy from waste material that comprises a section for the purification and recirculation of the washing liquid used to wash the gas, forming a basically closed cycle and thus limiting the need for clean water.

The above described task and object, and others that will be described later, are achieved by means of a plant for recovering energy as defined in claim 1, and by a process as defined in claim 13.

### BRIEF DESCRIPTION OF FIGURES

Advantages and characteristics of the present invention will be apparent from the following description, for exemplification only but not limited to, with reference to the appended figures, wherein:
- figure 1 is a schematic view of a plant for energy recovery from waste material according to the present invention;
- figure 2 is an enlarged view of a first section of the plant of figure 1 for pre-treating the incoming waste material and obtaining a mixture having the characteristics suitable to be fed into a pyrolysis reactor;
- figure 2A shows, in greater detail but schematically, a realization detail of the pre-treatment section shown in figure 2;
- figure 3 is an enlarged view of a second section of the plant of figure 1 comprising a pyrolysis reactor and a washing and cooling system for the pyrolysis gas obtained;
- figure 4 is an enlarged view of a third section of the plant of figure 1, for purifying and re-circulating the washing liquid used in the section for washing and cooling the pyrolysis gas;

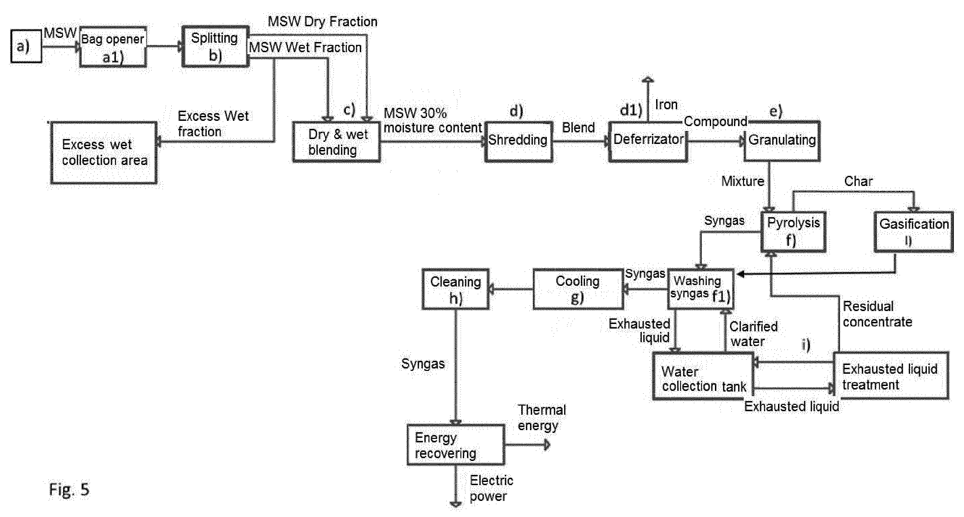

- figure 5 shows a block diagram of a process for recovering energy from waste material that can be realized by means of a plant according to the present invention.

### DETAILED DESCRIPTION OF AN EMBODIMENT OF THE INVENTION

The plant 100 for recovering energy from organic matrix waste material according to the present invention, adapted to carry out the relative energy recovering process, preferably comprises, or is composed of, three sections:
I) a first section 100A for receiving and pre-treating the waste material, wherein there are provided means and devices adapted to prepare a mixture suitable to feed a pyrolysis reactor arranged downstream;
II) a second section 100B comprises a particular pyrolysis reactor to carry out a slow pyrolysis, as previously described, so as to obtain a gas yield of about 70%, minimizing the production of ashes, of solid and liquid products; furthermore, downstream of this pyrolysis reactor, it is provided a section for refining the syngas obtained, that is for washing and cooling the same, so as to make it adapted to feed endothermic motors or cogeneration turbines;
III) a third section 100C ancillary to said second section 100B, comprising cooling and purifying means of the washing liquid of the gas and its subsequent recirculation, basically forming a closed cycle.

### FIRST SECTION - RECEIVING AND PRE-TREATING THE WASTE MATERIAL

A very advantageous characteristic of a plant 100 according to the present invention consists in the fact that it is capable of treating organic matrix waste material, preferably but not exclusively from unsorted municipal solid waste material (MSW) disposed of as it is, therefore comprising a dry fraction and a wet fraction not previously split.

As it is known, municipal solid waste material is extremely heterogeneous in its composition, particle size and moisture content; the latter, in particular, is rather changeable, and it is generally comprised between 15 and 50% by weight. However, as already said, in order to obtain the optimization of the gas yield of a pyrolysis reactor placed downstream, it requires to be fed with a material having a homogeneous particle size and constant moisture content, of an average value of 30 - 35% by weight.

The object of a section 100A for receiving and pre-treating the waste material according to the present invention, therefore consists in obtaining a mixture having the required characteristics, in particular basically "cold" working, that is without providing a drying step of the waste material, operation that is generally rather costly.

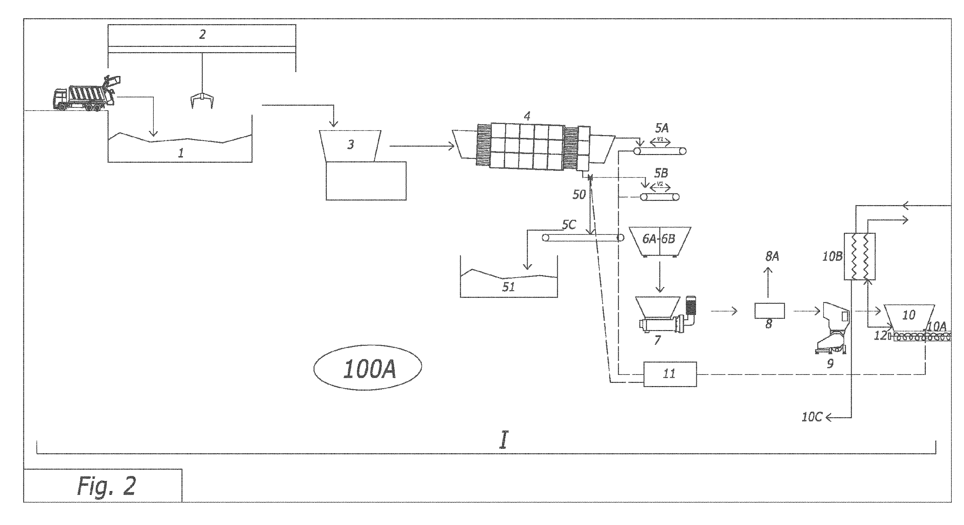

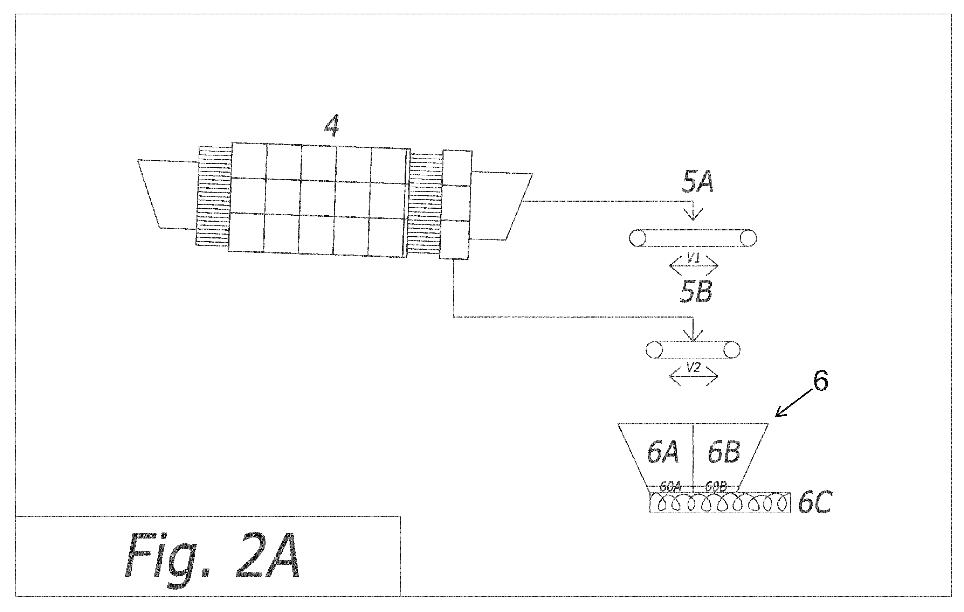

With reference to figure 2, there is shown a receiving and pre-treating section 100A comprising a storage compartment 1 adapted to receive said unsorted organic matrix solid waste material, from where it is then drawn, through handling means 2 and preferably loaded in a bag opener device 3 of the known type, capable of shredding waste material as disposed of.

Said storage compartment 1 can be realized in a landfill, underground, and in this case said handling means 2 can advantageously be formed by a crane mounted on a crane bridge suspended in correspondence of said landfill. Alternatively, the waste material can be put on a paved area arranged at ground level; in this case, said handling means 2 advantageously comprise one or more excavators, each provided with a grab hook bucket for lifting the waste material.

Downstream of the bag opener device 3, the waste material is transferred, by means of suitable means such as a conveyor belt, to a rotary screen 4, having the function of separating the screenovers, that is basically a dry fraction having a water content between 10-30%, from the screenunders, that is basically a wet fraction, characterized by a water content between 40 and 70% by weight.

Exiting said rotary screen 4, the dry fraction and the wet fraction are respectively conveyed onto a first and second linear conveyor means 5A, 5B, each one advantageously formed by a conveyor belt comprising a closed loop belt supported by spherical bearings and rotating in a reversible manner about suitable rollers, for example thanks to electric motors provided with suitable reducers.

Said first and second conveyor means 5A, 5B are shaped so as to displace the respective waste material fraction to a loading hopper 6, arranged underneath them, whose internal volume is divided into a first chamber 6A and a second chamber 6B arranged side by side, as better shown in figure 2A. Each of said chambers 6A, 6B is mounted on a respective load cell 60A, 60B, adjusted so as to calculate the exact amounts of each fraction, and in correspondence of its base it is connected to a mixing auger conveyor 6C.

According to a peculiar characteristic of the invention, said conveyor means 5A, 5B can be alternatively moved in both directions, so that each one of them can continuously discharge the respective fraction of material in one of said chambers 6A, 6B of said loading hopper 6; in particular, when said first conveyor means 5A is moved so as to discharge the respective waste material fraction, that is the one basically dry in the first chamber 6A of said loading hopper 6, the second conveyor means 5B will discharge the respective waste material fraction, that is the one basically wet in the second chamber 6B of said loading hopper 6, and vice versa.

Each of said first and second chamber 6A, 6B of said loading hopper 6 is preferably filled with the two fractions in different proportions, and in particular about 65-70% of dry fraction and about 35-30% of wet fraction, preferably discharging therein first the dry fraction of the waste material, generally having a lower specific weight, and subsequently the wet fraction, generally having a higher specific weight.

Advantageously, in order to avoid dead times, speed V₂ of the second conveyor means 5B, operating with the wet fraction, is lower than speed V₁ of the first conveyor means 5A operating with the dry fraction. Control and command means 11 monitor and regulate the speed of the conveyor means 5A and that of the conveyor means 5B so as to ensure the process continuity and, consequently, a constant flow to the pyrolysis reactor placed downstream, as later described in greater detail.

When said first chamber 6A and said second chamber 6B of the loading hopper 6 are filled with the pre-set proportions of the dry fraction and of the wet fraction, the mixing auger conveyor 6C is actuated and, also thanks to the different specific weights of the dry and wet fractions previously loaded, they are remixed, forming a single blend.

Said mixing auger conveyor 6C transports said blend to a crushing device 7 adapted to homogenize its particle size so as to obtain a compound having particles of an average size of about 30-50 mm. Furthermore, downstream of said crushing device 7, it is advantageously provided a granulator 9 adapted to further reduce the particle size of the compound up to an average size of about 10 mm, thus obtaining a mixture.

Preferably, the pre-treatment plant according to the present invention is provided with a metal separator 8 having magnetic means capable of separating possible ferrous residues, discharging them through a suitable exit 8A; said metal separator 8 is advantageously arranged downstream of said crushing device 7 but upstream of said granulator 9 so as to prevent possible ferrous residues from damaging the latter.

The mixture continuously exiting said granulator 9 is ready to be fed into the pyrolysis reactor through a loading hopper 10, inside which it is poured. Here, it is advantageously accommodated a humidity sensor 10A, such as a hygrometer, adapted to detect the moisture of the mixture contained into said loading hopper 10. Said sensor 10A is adapted to transmit the detected data to the control and command means 11, such as a PLC control unit, that compares the detected values with the pre-set values and, should there be a discordance between them beyond a defined tolerance level, consequently intervenes on the plant devices; in particular, should the detected moisture be too low, for example because of the previous pre-treatment steps, water will be added into the loading hopper 10 in the quantity necessary to restore the exact moisture value in the mixture.

Conversely, should the water amount present in the mixture be too high, it is possible to provide a thermal exchange by means of a suitable heat exchanger 10B, for example by means of warm combustion gases coming from the pyrolysis reactor and directed to the chimney 10C, so as to obtain a dehumidification of the mixture and therefore restore the desired moisture value.

Possibly, the control can be carried out operating also upstream, that is adjusting the speed V₁ and V₂ of said conveyor means 5A, 5B, so as to change instantaneously the proportions of the dry fraction and of the wet fraction poured into the chambers 6A, 6B of the loading hopper 6 and consequently the mixture composition.

If the amount of the wet fraction in the waste material conveyed as it is, is temporarily excessive with respect to the dry fraction, that the compensation system provided by the pre-treatment system is not capable to absorb, in case it can be drawn downstream of the rotary screen 4 thanks to a switch valve 50, sent to a third conveyor means 5C and finally collected into a storage container 51, and then subsequently be disposed of or reintroduced in the process if needed.

A loading auger 12 finally draws the mixture poured in the loading hopper 10 and introduces it into the mouth of the pyrolysis reactor 13, compressing it so as to further homogenize it and eliminate the air contained therein. As it can be seen from the foregoing, the waste material pre-treatment described above, is basically "cold" worked, as, in fact, it does not involve any drying step of the material: this is possible thanks to the preliminary separation of the dry fraction and of the wet fraction of the conveyed unsorted waste material, and to their subsequent re-mixing in the pre-set quantities, so as to obtain a mixture having a pre-set and constant moisture value.

Moreover this pre-treatment plant is strong and flexible, as it is capable of absorbing and compensating for possible changes or pitches in the composition of the incoming waste material, adjusting in real time some process parameters, such as the speed of said first and/or said second conveyor means 5A, 5B, realizing a heat exchange with the combustion fumes or adding the necessary water quantity based on the moisture data detected by the sensor 10A.

### SECOND SECTION - PYROLYSIS, WASHING AND COOLING OF THE GAS OBTAINED

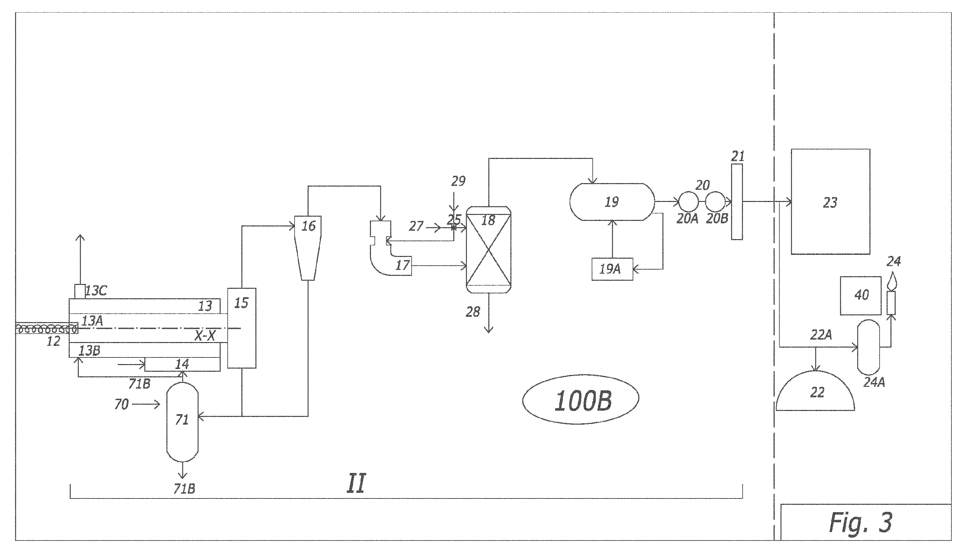

The mixture prepared in the plant pre-treatment section 100A is transferred to the second section 100B of the plant 100 according to the present invention, shown in figure 3.

The mixture is then drawn from the loading hopper 10 thanks to said loading auger 12 that feeds it to the mouth of a pyrolysis reactor 13 shaped and dimensioned so that the residence time of the material inside is sufficient for the molecular disintegration of the organic matter present and for the formation of pyrolysis products, in particular maximizing the syngas production.

In fact, inside a pyrolysis reactor main and secondary reactions occur, both cracking and reforming reactions, some of which can be privileged with respect to other ones based on their reaction rate, which in turn depends on the temperature and on the composition of the same waste material. Therefore, changing some process parameters, such as the reaction temperature, the waste material heating rate, the residence time of the material at the temperature of reaction and the waste material size to be treated, it is possible to favour some reactions with respect to others, consequently obtaining the desired composition of the gas exiting the reactor.

In fact, besides maximizing the gas production, the purpose of a pyrolysis reactor 13 according to the present invention is that of improving the quality of the gas obtained in terms of its composition, maximizing the weight percentage of methane (CH₄) with respect to the hydrogen one (H₂), so as to obtain a gas suitable to be used in turbocharged motors. By means of suitable measurement or control means, such as sensors positioned inside the reactor and connected to a PLC (not shown), it is possible to monitor the above described process variants and in case consequently operate on devices/means placed upstream of the reactor 13 or inside the same, to restore them to the desired values.

Preferably, said reactor 13 belongs to the class of horizontal rotating fixed-bed reactors. Specifically, said reactor 13 comprises a first pyrolysis chamber 13A, having an essentially cylindrical shape, rotating around its longitudinal extension axis X-X arranged inclined with respect to a horizontal plane by an angle greater than 2°, so as to allow the transition of the material fed inside it. Preferably, said first pyrolysis chamber 13A is made to rotate thanks to an explosion-proof ratio-motor regulated by an inverter (not shown).

Advantageously, said first chamber 13A is basically realized airtight, so as to prevent the air from entering which would act as combustion air causing an undesired combustion process, and it is provided with handling means, such as preferably an inner finning (not shown) adapted to facilitate the transition of the material that accidentally might settle at the bottom, favouring the recirculation of the same.

Said first chamber 13A is contained in a heating jacket 13B, basically cylindrical and coaxial to said first chamber 13A, preferably realized as an oven coated with a refractory material and provided with a plurality of burners 14 arranged in the lower area basically along the longitudinal extension thereof, so as to uniformly distribute the heat in the axial direction thus reducing heat losses as much as possible. Advantageously, the whole reactor is insulated with a rock wool layer in order to reduce heat losses.

In said outer jacket 13B an exhaust gas is circulated, having a temperature of about 700°C that, when the reactor is started, is supplied by the LPG or methane combustion by means of said plurality of burners 14, whereas at the steady state it is supplied by the pyrolysis gas obtained by the same reactor 13.

In this way, the inner temperature of said first chamber 13A is kept at a constant temperature between about 450 and 600°C and in a substantial absence of oxygen so that the material contained therein undergoes a thermal process of decomposition so as to form carbon, which in the presence of water vapour obtained by the moisture contained in the waste material to be pyrolyzed, makes it possible to obtain a pyrolysis gas with a yield of about 70%; furthermore, the reactor 13 is designed so that the residence time of the material therein is of about 40 - 80 minutes.

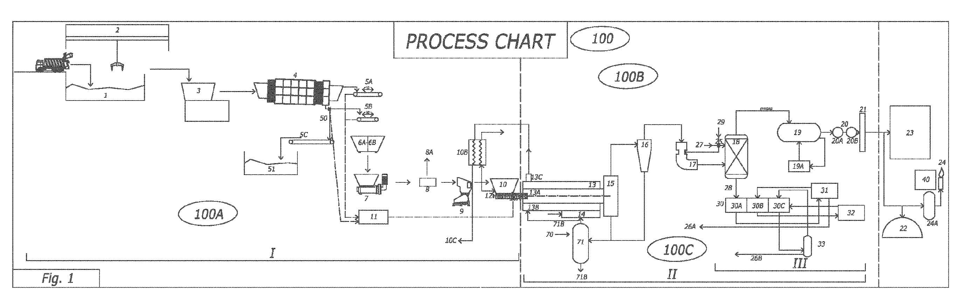

The combustion fumes circulating inside the heating jacket 13B are then expelled through an exit controlled by a respective valve 13C, and conveyed thanks to a suitable exchange duct towards the chimney. Before being emitted into the atmosphere, the combustion fumes are suitably cooled, in case by means of a thermal exchange with the mixture in transition in the loading hopper 10 arranged upstream of the reactor 13, as shown in figure 1, and subsequently treated by a catalytic system to allow the complete removal of possible non-combustible micro-pollutants.

A second pyrolysis chamber 15, or separating chamber, having an essentially cylindrical shape with a vertical axis, is T-fitted with said first chamber 13A so as to be in fluid communication with the same; from the top of said second chamber 15 it is drawn the pyrolysis gas to be sent to a successive sub-section of the plant wherein it is suitably cooled and purified, while from the bottom thereof the ashes and possible pyrolysis solid residues are discharged, preferably thanks to auger conveyors separated one from the other and from the outside by means of a gastight pneumatic valve; advantageously, the operation of said auger conveyors is synchronized by control means, such as a PLC.

Said second section 100B further comprises cooling and purifying means of the pyrolysis gas having the function of eliminating the impurities thereof, to avoid damaging the equipment passed through by the gas and arranged further downstream in the plant, and make it more suitable to be used in endothermic motors or in a cogeneration plant.

The impurities in the gas in particular comprise dusts and solid residues and liquids transported in suspension by the same gas, as well as acid gases such as sulphydric acid and carbonyl sulphide in variable amount depending on the waste material composition incoming into the plant 100.

As explained later in greater detail, as regards the removal of the particulate, the treatment system arranged downstream of the reactor 13 is equipped with cyclones, quench and washing columns, besides more advanced technologies such as ceramic candle filters made of silicon carbide and sintered metals based materials, so that the overall removal efficiency is rather high. In particular, ceramic filters are used for the refined filtration of the syngas to be used for the production of energy and heat, for the removal of pollutants and for the separation of residual condensates.

The gas exiting said second pyrolysis chamber 15 is introduced into a cyclone 16 that is a device that, thanks to the action of the centrifugal force, separates the solid residues from the gas flow. From the cyclone 16, the gas without the greater part of dusts undergoes a rapid cooling, called "quench", wherein it goes from a temperature of about 450°C to about 45°C, thus obtaining the condensation of the acid gases and of possible condensable TAR.

In this phase, the gas is caused to pass in a quench apparatus 17 comprising a duct provided with a portion having a reduced section, in correspondence of which cold water is added; due to the Venturi effect, the water introduced is finely dispersed in the gas.

Subsequently, the cooled gas is sent to a washing unit 18 comprising a wet scrubber, that is a washing column provided with a vertical tank within which it is arranged a plurality of filling elements hollow and preferably having a cylindrical shape made of inert material, such as Raschig rings. That tank is crossed by a suitable water flow introduced thanks to a first duct 29, which moves counter current with respect to the gas, so as to facilitate the removal of residual impurities in the pyrolysis gas through absorption.

Subsequently, the pyrolysis gas is filtered, by a forced passage through a filtering unit 20 preferably comprising a gravel filter 20A and a candle filter 20B, for the removal of possible pollutants and for the separation of the residual moisture.

Possibly, said filtering unit 20 may comprise an absolute fibreglass cartridge filter to increase the removal efficiency of possible condensate oils/tars which might cause problems if the syngas obtained is fed to endothermic motors.

Furthermore, in order to prevent the blocking and clogging of the gas meters, downstream of the candle filter 20B safety devices can be installed, such as burners or other means, so as to reach a very high degree of efficiency, also with very small sized particulate.

Finally, the cooled and purified gas is drawn through pumping means, such as an extractor, and conveyed thanks to a collector 21 towards a storage tank 22 or towards a cogeneration plant 23, for the combined production of electric power and thermal energy, associated to the pyrolysis process.

In case it is necessary to dispose of possible gas excess, it is provided a control system of emissions 40, controlled by a suitable valve 22A and comprising a burner 24 provided with a pilot flame, adapted to act as a safety torch. Upstream of said burner 24, said control system of emissions preferably comprises a "hydraulic guard" 24A: the end portion of the duct conveying the excess gas to the burner 24 is immersed into a well constantly kept filled with a seal liquid, such as water, so as to avoid pressure surges and prevent potentially dangerous air suction since explosive mixtures can be formed.

In case, downstream of said washing unit 18, there can be provided a condensation unit 19 preferably comprising a heat exchanger associated to a refrigerating unit 19A, where possible residual liquid particles within the pyrolysis gas condensate and therefore they can be eliminated; the gas temperature before being fed to the cogeneration motors is preferably reduced to 5 - 7°C.

Furthermore, advantageously it is possible to add to the above described pyrolysis process, a gasifier section 70 of the CHAR exiting the lower part of the second pyrolysis chamber 15, and of possible solid residues separated by said second cyclone 16, through which it is possible to change their carbonaceous structure into further syngas, having anyway a lower calorific value with respect to that of the gas produced by the pyrolysis reactor 13.

The gasification process carried out inside a gasifier 71, takes place at a higher temperature with respect to the previous pyrolysis process, that is about 700-800°C, with supply of vaporized water and in the presence of air which acts as a comburent. Moreover, the residence times inside said gasifier 71 are much shorter with respect to those of the pyrolysis reactor 13.

Said gasifier 71 is preferably internally sub-divisible into two distinct operating areas: the lower part is occupied by a boiling fluid bed, whereas there is a dragging bed in the upper area.

Furthermore, it is provided a recirculation system comprising a cyclone, adapted to separate the coarser dragged particles reintroducing them into the boiling bed area, and ceramic filters for reducing the particles to 1µm.

The recirculation system is managed by a dosing screw monitored by control means, such as a PLC, which also regulates the system for the ashes discharge through an auger. The gas tightness inside the reactor during the discharge is ensured by a pair of valves.

The air necessary for the gasification process is introduced in the gasifier 71 having a pressure suitable to compensate for the system load losses, preferably passing through a pre-heating compartment, wherein a heat exchange with the gas exiting the gasifier 71 takes place so as to reach a temperature comprised between 130 °C and 150 °C.

Water, instead, is introduced through a dosing pump preferably at the front of the gasifier 71 where, thanks to the high temperature, it instantly vaporizes. In this way, advantageously, it is avoided to use a heat source external to the plant. A dosing screw, controlled by suitable control means such as a PLC, feeds the solid residues inside the gasifier 71.

In order to recover, as much as possible, the heat generated in the gasification section 70 for the pyrolysis compartment, the syngas exiting the gasifier 71 is advantageously conveyed, by means of a suitable blower (not shown), to feed said plurality of burners 14, or it is directly introduced in the outer jacket 13B of said reactor 13 so that it can give heat to said first pyrolysis chamber 13A and make it possible to carry out the pyrolysis endothermic reactions inside it; in this case, the syngas obtained by the gasifier can subsequently be drawn from the outer jacket 13B and conveyed to the purification system together with the syngas produced by the pyrolysis reactor 13, increasing, in this way, the overall gas production to be sent to the storage 22 or to the cogeneration plant 23.

### THIRD SECTION - COOLING AND PURIFICATION OF THE WASHING LIQUID

The washing liquid coming from said washing unit 18 has a temperature of about 60°C and comprises an aqueous solution where solid residues are dissolved; advantageously, instead of disposing of the washing liquid, this is suitably treated in a third section of the plant 100 for cooling and purifying it so that it can be reused in the quench apparatus 17 and in the washing unit 18, realizing a basically closed cycle.

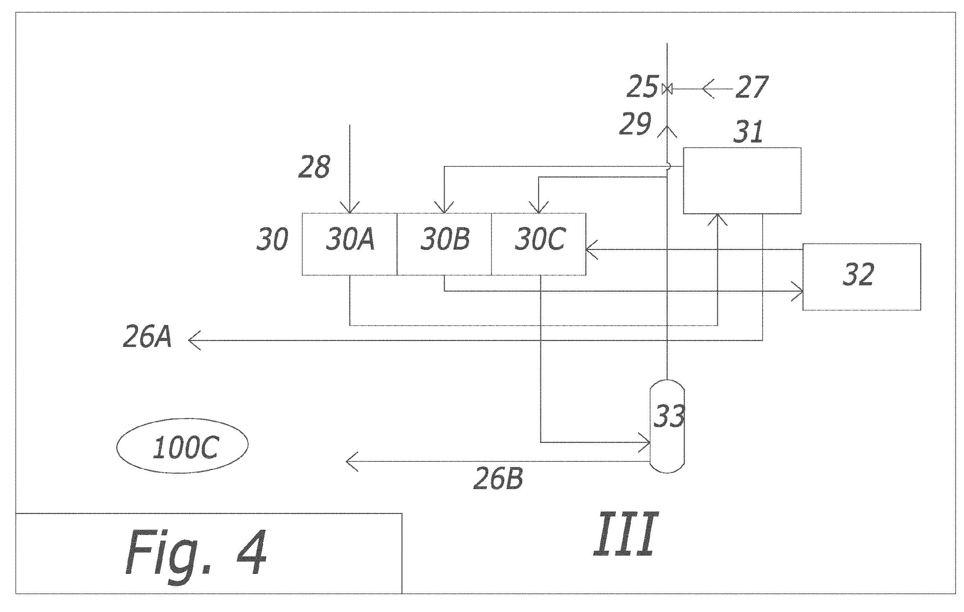

As shown in figure 4, said cooling and purifying section 100C comprises a collecting and decanting tank 30 divided into three subsequent compartments 30A, 30B, 30C, realized by means of partitions suitably arranged, within which it is collected the washing liquid coming from a first recirculation duct 28 connectable to said washing unit 18.

The washing liquid is then drawn from the first compartment 30A of the tank 30 and sent to suitable flotation/sedimentation means 31 through which it is obtained the actual separation between a clarified water and a concentrate, commonly called "sludge"; the latter is drawn through pumping means and sent, before being dried, into said loading hopper 10 through a first exhaust duct 26A, so as to be introduced again into the pyrolysis reactor 13.

Instead, the clarified water is reintroduced into the second compartment 30B, wherein it is cooled by means of a heat exchanger 32; finally, it goes into the third compartment 30C, wherein thanks to an evaporator 33 it reaches a purity value so as to be suitable for the subsequent reuse, through a second recirculation duct 29, inside said washing unit 18 and said quench apparatus 17; if necessary, the recycled water can be in case filled up with clean water through a filling up duct 27 controlled by a valve 25. The residual concentrate of the evaporation is instead dried and sent again to the loading hopper 10 through a second exhaust duct 26B.

The process for recovering energy from waste material realizable in a plant as previously described basically comprises the following operating steps:
a) receiving of said organic matrix solid waste material;
b) splitting waste material into a dry fraction and a wet fraction;
c) blending together said fractions in predetermined proportions so as to obtain a blend having a pre-set moisture content;
d) shredding the blend obtained at step c) for obtaining a compound;
e) granulating the compound obtained at step d) for obtaining of a mixture having homogeneous particle sizes;
f) pyrolysis of the mixture obtained at step e) for the production of a pyrolysis gas; and
f1) washing said pyrolysis gas; and
g) cooling said pyrolysis gas.

Advantageously, said pyrolysis step f) is carried out at a constant temperature between 450 and 600°C and for a period of time comprised between 40 and 80 minutes so as to maximise the gas yield, and in particular a gas having a high methane concentration.

In case, before the splitting step b), the waste material can undergo a shredding step a1), through which the container bags are torn to allow a greater homogeneity of the waste material to be treated.

Furthermore, there can be envisaged a deferrization step d1) of the blend obtained in the blending step c), preferably before the granulating step e).

In case, the washing liquid used in the washing step f1) of the pyrolysis gas can undergo a purifying step i) and then be reused again in the washing step f1) of the gas.

The solid residues coming from the pyrolysis step f) can in case undergo a gasification step I) so as to increase the syngas amount obtained that then, it too, is sent to the washing step f1), whereas the ashes are disposed of.

Finally, the gas can undergo a cleaning step h) wherein it is further filtered in a filtration unit.

Advantageously, the above described process is carried out in a closed and protected environment, constantly kept in a slight depression, so as to prevent the emission of fetid fumes into the atmosphere.

In conclusion, from the foregoing it is apparent that a plant for recovering energy from waste material, and related process for realizing it, according to the present invention, make it possible to achieve the expected objects and advantages.

In fact, it has been planned a plant and related process for recovering energy from organic matrix waste material based on an improved and maximised pyrolysis treatment for the production of gas, in particular having qualitative characteristics such that it is made suitable to feed endothermic motors and/or cogeneration turbines.

The above described plant for recovering energy from waste material can obtain about 70% of gas yield, receiving waste material having an extremely heterogeneous composition, and regulating its moisture without costly drying steps or the addition of catalysts.

Thanks to the plant according to the present invention, the energy recovery has been maximised, as it has been avoided, as far as possible, the use of fuel and/or of a heat source external to the plant, making the process profitable also under the financial point of view.

Furthermore, thanks to the purification and the recirculation section of the washing liquid used to clean the gas, it has been obtained a closed circuit that limits the need for clean water.

Finally it is to be noted that, being the collected waste material equal, the energy recovery of a plant for recovering energy from waste material according to the present invention, if compared to the area occupied by the same plant, is much higher with respect to any other type of plant for treating unsorted waste material.

Of course, the present invention is susceptible of a great number of applications, modifications and variants without departing from the field of protection, as defined by the appended claims. Furthermore, the materials and equipment used to realize the present invention, as well as the forms and sizes of the single components, can be the most suitable according to specific requirements.

## Claims

1. Plant (100) for recovering energy from organic matrix solid waste material comprising:
- a first section (100A) for receiving and pre-treating said organic matrix solid waste material so as to obtain a mixture having uniform pre-set moisture content and homogeneous particles size;
- a second section (100B) for carrying out a pyrolisys treatment of said waste material and for subsequent washing and cooling a pyrolysis gas obtained; and
- a third section (100C) for cooling and purifying a washing liquid of said pyrolysis gas for a subsequent recirculation.

2. Plant (100) according to claim 1, wherein said first section (100A) comprises a rotary screen (4) adapted to split the incoming waste material into a dry fraction and a wet fraction, and a first and a second linear conveyor means (5A, 5B), each being adapted to receive a respective fraction between said dry fraction and said wet fraction from said rotary screen (4) and to displace the respective fraction to a loading hopper (6) whose internal volume is divided into a first and a second chamber (6A, 6B) arranged side by side, wherein said wet fraction and said dry fraction are discharged in predetermined proportions to obtain a blend having a pre-set moisture content.

3. Plant (100) according to claim 2, wherein said first and said second linear conveyor means (5A, 5B) are each formed by a conveyor belt comprising a closed loop belt supported by spherical bearings and adapted to rotate in a reversible manner.

4. Plant (100) according to claim 3, wherein the speed (V₂) of said second conveyor means (5B) operating with said wet fraction, is lower than the speed (V₁) of said first conveyor means (5A) operating with said dry fraction.

5. Plant (100) according to any one of claims 2 to 4, further comprising at least a crushing device (7) adapted to homogenize the particles size of said blend, so as to obtain a compound having particles of an average size of about 30-50 mm.

6. Plant (100) according to claim 5, further comprising a granulator (9) adapted to reduce the particles size of said compound so as to obtain a mixture having particles of an average size of about 10mm.

7. Plant (100) according to any one of the preceding claims, wherein said second section (100B) comprises a pyrolysis reactor (13) comprising a first pyrolysis chamber (13A) having an essentially cylindrical shape and rotating around the longitudinal extension axis (X-X) thereof, wherein a mixture obtained from an organic matrix solid waste material is loaded, said second section (100B) further comprising a heating jacket (13B), arranged coaxially to said first chamber (13A) and provided with a plurality of burners (14) disposed along the longitudinal extension thereof, wherein an exhaust gas is circulated.

8. Plant (100) according to claim 7, wherein said extension axis (X-X) is arranged inclined with respect to an horizontal plane by an angle greater than 2°, said first pyrolysis chamber (13A) also comprising actuating means configured so as to facilitate the transition of the material inside said reactor (13).

9. Plant (100) according to claim 7 or 8, further comprising a second pyrolysis chamber (15), having an essentially cylindrical shape with a vertical extension axis and arranged so as to be in fluid communication with said first pyrolysis chamber (13A), said second pyrolysis chamber (15) being configured so that from the top thereof a pyrolysis gas is drawn and from the bottom thereof solid residues are discharged.

10. Plant (100) according to any one of claims 7 to 9, further provided with washing and cooling means for the pyrolysis gas, said means comprising at least one cyclone (16), a quench apparatus (17) and washing unit (18) comprising a wet scrubber.

11. Plant (100) according to claim 9 or 10, further comprising a gasifier (71) adapted to receive the solid residue discharged at least from said second pyrolysis chamber (15) so as to obtain additional gas to be recirculated into said washing and cooling means.

12. Plant (100) according to any of the preceding claims, wherein said third section (100C) comprises a collecting and decanting tank (30) of a washing liquid of a gas, said tank (30) being divided at least into a first compartment (30A), connected to flotation/sedimentation means (31), a second compartment (30B) connected to a heat exchanger (32) and a third compartment (30C), connected to an evaporator (33).

13. Process for recovering energy from organic matrix solid waste material comprising the following steps:
a) receiving of said organic matrix solid waste material;
b) splitting said waste into a dry fraction and a wet fraction;
c) blending together said dry fraction and said wet fraction in predetermined proportions so as to obtain a blend having a pre-set moisture content;
d) shredding the blend obtained in said step c) for obtaining a compound;
e) granulating the compound obtained at step d) for obtaining of a mixture having homogeneous particles size;
f) carrying out a pyrolysis of the mixture obtained at step e) for the production of a pyrolysis gas;
f1) washing said pyrolysis gas; and
g) cooling said pyrolysis gas.
